# EUROPEAN PATENT SPECIFICATION

(11) **EP 3 556 949 B1**
(45) Date of publication and mention of the grant of the patent: **23.03.2022**
(21) Application number: 19170309.9
(22) Date of filing: 18.04.2019
(51) Int. Cl.: E03C 1/02, E03C 1/042, F16K 11/085, F16K 27/06

(54) **AN INSTALLATION STRUCTURE OF A WATER OUTLET VALVE AND AN OUTLET VALVE**
INSTALLATIONSSTRUKTUR EINES WASSERAUSLASSVENTILS UND AUSLASSVENTIL
STRUCTURE D'INSTALLATION D'UNE SOUPAPE DE SORTIE D'EAU ET D'UNE SOUPAPE DE SORTIE

(30) Priority: 20.04.2018 CN 201810359788
(43) Date of publication of application: 23.10.2019
(73) Proprietor: Xiamen Solex High-tech Industries Co., Ltd., 361000 Fujian (CN)
(72) Inventor: LIN, Fangqi, Xiamen Area of China (Fujian) Pilot Free Trade Zone (CN); HU, Lihong, Xiamen Area of China (Fujian) Pilot Free Trade Zone (CN); CHEN, Wenxing, Xiamen Area of China (Fujian) Pilot Free Trade Zone (CN)
(74) Representative: Lang, Christian

(56) References cited:
- CN-U- 202 733 055
- CN-U- 205 036 896
- DE-A1-102016 010 388

## Description

### Technical field

The present invention relates to the field of sanitary ware, in particular to a water outlet valve.

### Related art

Document CN 202 733 055 U discloses a conventional waterway switching device, which comprises a body, as well as a water purification unit and a switching valve installed inside the body. The body includes a fixing end for fixing the waterway switching device to an installation surface. For that purpose, the fixing end defines a trapezoidal groove for receiving a trapezoidal fixing piece, said trapezoidal fixing piece defining a closed end surface with a middle hole and said middle hole cooperating with a screw to be fixed to an installation surface.

The installation of the outlet valve in the prior art is cumbersome. First, it is necessary to fix an installation seat on the wall surface, and then connect the outlet valve to the installation seat. The installation is not convenient, there are many steps. The other shortage is that there is a gap between the exposed installation seat and the water outlet valve, so that the integrity of the entire outlet valve is relatively poor, and the appearance of the splitting feeling is relatively heavy.

### Summary of the invention

The main technical problem to be solved by the present invention is to provide an installation structure of a water outlet valve, which simplifies the installation process of the water outlet valve.

In order to solve the above technical problem, the present invention provides an installation structure for a water outlet valve according to claim 1.

In another preferred embodiment, the installation fixture is a screw.

The present invention further provides a water outlet valve according to claim 3.

In another preferred embodiment, the waterway switching shaft has a constant opening that is connected to the water inlet and a flow port that moves with the waterway switching shaft; when the flow port is connected to one of the water outlets, this water outlet is in a water flowing state, and the remaining water outlets are in a water stop state.

In another preferred embodiment, the water inlet and the water outlets are respectively disposed on the side surface of the body and extend in a direction perpendicular to the axial direction of the body.

In another preferred embodiment, the waterway switching shaft is disposed in the body along the axial direction of the body and is rotatable around the axial direction of the body, the flow port is disposed on the side wall of the waterway switching shaft; the installation shaft is disposed in the waterway switching shaft, and a flowing gap is disposed between an area of the outer wall of the installation shaft corresponding to the constant opening and the flow port and the inner wall of the waterway switching shaft; the outer wall of the installation shaft is provided at both ends of the flowing gap with a sealing member that is sealingly fitted to the inner wall of the waterway switching shaft.

In another preferred embodiment, further comprising: a switching member for driving the rotation of the waterway switching shaft, the switching member is mounted on an end of the body away from the installation fixture and is linked to the waterway switching shaft.

In another preferred embodiment, further comprising an upper sealing seat and a lower sealing seat, the upper sealing seat and the lower sealing seat are respectively disposed at two ends of the body along the axial direction and sealing the inner wall of the body; the lower sealing seat is disposed with a passage through which the insertion portion passes along the axial direction; the end surface of the waterway switching shaft and the end surface of the lower sealing seat form the constant opening.

In another preferred embodiment, the switching member is a rotating handle.

In another preferred embodiment, the seal ring is disposed on the outer circumference of the opening of the water outlet at one side near the waterway switching shaft, the seal ring and the side wall of the water passage switch shaft are fitted to seal the water outlets from the constant opening.

Compared with the prior art, the technical solution of the present invention has the following beneficial effects:
1. The installation structure of a water outlet valve of the present invention is provided that, the water outlet valve can be directly fixed on the installation surface by screws, the cost is very low, and the installation step is also very convenient.
2. The water outlet valve provided by the present invention is provided that water always flows only in the order of the water inlet, the flowing gap and the water outlet, water does not flow to the rest of the outlet valve and does not flow into the installation fixture. In this way, the water pressure area of the entire outlet valve can be reduced, and the influence of the water pressure on the rotating switching force of the handle can be reduced, so that the switching feel is better.

### Brief description of the drawings

FIG. 1 is a perspective view showing the structure of a switching valve in a preferred embodiment of the present invention;
FIG. 2 is an exploded view showing the structure of the switching valve in a preferred embodiment of the present invention;
FIG. 3 is a water circuit diagram of a first water outlet of the switching valve in a preferred embodiment of the present invention;
FIG. 4 is a water circuit diagram of a second water outlet of the switching valve in a preferred embodiment of the present invention.

### Detailed description of the embodiments

The present invention will be further described below in conjunction with the accompanying drawings and embodiments.

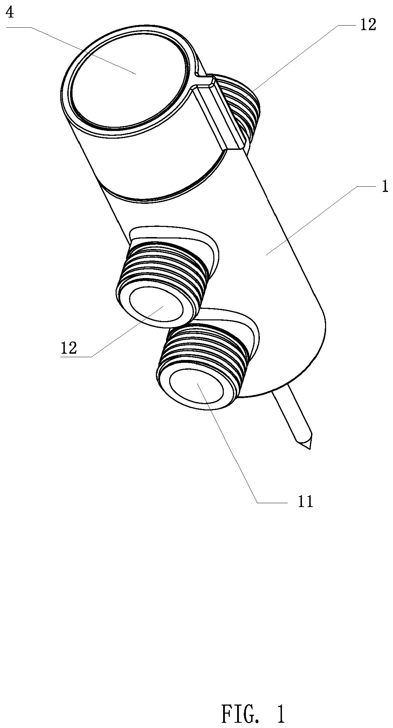

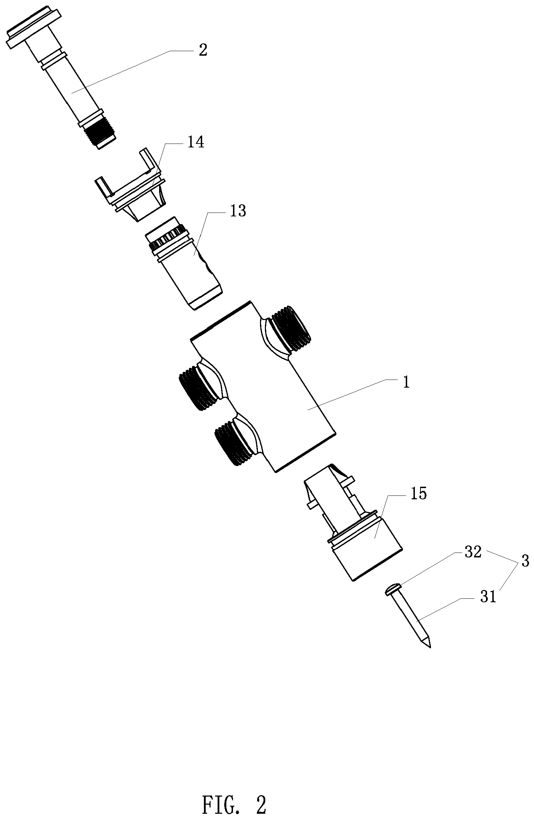

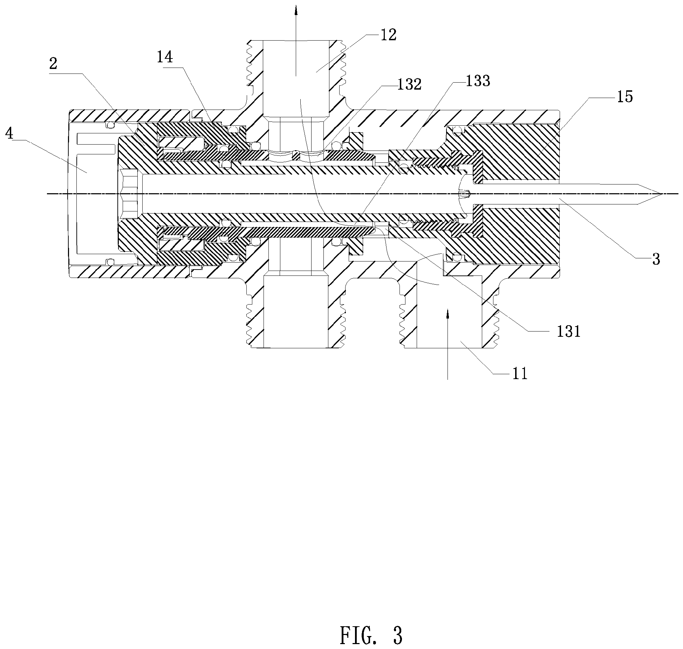

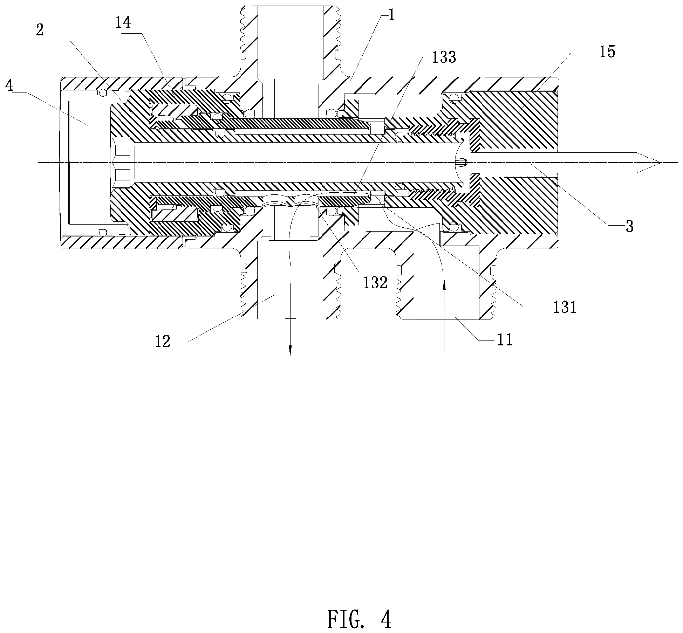

Referring to FIGS 1-4, a water outlet valve comprises: a body 1, an installation shaft 2 and an installation fixture 3;

The body 1 is axially disposed with a cavity having an opening at the side facing the installation surface; the installation shaft 2 is disposed in the cavity along an axial direction of the body 1, the installation shaft 2 is disposed with a through installation cavity along the axial direction of the body 1;

The installation fixture 3 is disposed with an insertion portion 31 and an abutting portion 32, the insertion portion 31 enters from a side of the through installation cavity away from the installation surface, and is inserted to the installation surface through the opening from the side of the through installation cavity near the installation surface; the abutting portion 32 is located in the through installation cavity and abuts the inner wall of the through installation cavity along the axial direction of the body 1. In this embodiment, the installation fixture 3 is a screw, and the nut of the screw is the abutting portion 32, and the diameter thereof is larger than the opening diameter of the side of the through installation cavity near the installation surface, so that the nut abuts against the inner wall of the through installation cavity near the installation surface along the axial direction of the body 1, thus achieving the fixed installation of the body 1.

Therefore, the above-mentioned water outlet valve does not need to prepare a separate installation seat during installation, and the water outlet valve and the installation surface can be fixedly connected together by a single screw. The installation procedure is simple, the structural strength is high, and the appearance of the water outlet valve is relatively good.

In the embodiment, the water outlet valve is further a water outlet switching valve, so the body 1 comprises a water inlet 11, two water outlets 12 and a waterway switching shaft 13; the water inlet 11 and the water outlets 12 are respectively disposed on the side of the body 1 and extend in a direction perpendicular to the axial direction of the body 1. The two water outlets 12 are respectively located on two sides of the body 1 and are located in the same plane perpendicular to the axial direction and on the same side of the body 1 as the water inlet 11 and one of the water outlets 12.

The waterway switching shaft 13 can move relative to the body 1 such that the water inlet 11 can be connected to different water outlet 12. It should be noted that the number of the water outlets 12 can be increased or decreased as needed, which is a simple replacement of the embodiment, and will not be described again.

In order to realize that water can flow from the water inlet 11 to one of the water outlets 12 to realize the waterway switching, the waterway switching shaft 13 has a constant opening 131 connected to the water inlet 11 and a flow port 132 movable with the waterway switching shaft 13. When the flow port 132 is connected to one of the water outlets 12, this water outlet 12 is in a water flowing state, and the remaining water outlet 12 is in a water stop state.

The waterway switching shaft 13 is disposed in the body along the axial direction of the body 1 and is rotatable around the axial direction of the body 1, the flow port 132 is disposed on the side wall of the waterway switching shaft 13; the installation shaft 2 is disposed in the waterway switching shaft 13, and a flowing gap 133 is disposed between an area of the outer wall of the installation shaft 2 corresponding to the constant opening 131 and the flow port 132 and the inner wall of the waterway switching shaft; the outer wall of the installation shaft 2 is provided at both ends of the flowing gap 133 with a sealing member that is sealingly fitted to the inner wall of the waterway switching shaft 13.

Therefore, when the waterway switching shaft 13 is rotated, the flow port 132 is rotated about the axial direction. When the flow port 132 is rotated to a position connected to one of the water outlets 12, the water flow flows from the water inlet port 11 into the flow gap 133, and then flows out of the water outlet 12 after passing through the flow port 132 from the flow gap 133, and the other water outlet 12 is in a water stop state. After that when the waterway switching shaft 13 is rotated, the flow port 132 is connected to the next water outlet 12, thus realizing waterway switching.

In order to facilitate the user to operate the waterway switching shaft 13 to rotate, a switching member 4 for driving the waterway switching shaft 13 is further comprised, and the switching member 4 is mounted on the end of the body 1 away from the installation member and is linked to the waterway switching shaft 13 is connected. In this embodiment, the switching member 4 is specifically selected as a handle.

In order to realize the sealing inside the water outlet valve, the body 1 further comprises an upper sealing seat 14 and a lower sealing seat 15, the upper sealing seat 14 and the lower sealing seat 15 are respectively disposed at two ends of the body along the axial direction and sealing the inner wall of the body 1; the lower sealing seat is disposed with a passage through which the insertion portion 31 passes along the axial direction; the end surface of the waterway switching shaft 13 and the end surface of the lower sealing seat 15 form the constant opening 131.

In addition, in order to prevent the water flow from bypassing the flow gap 133 and flowing directly into the water outlet 12 and causing all the water outlets 12 to discharge water, a seal ring is disposed on the outer circumference of the opening of the water outlet 12 at one side near the waterway switching shaft 13, the seal ring and the side wall of the water passage switch shaft 13 are fitted to seal the water outlets 12 from the constant opening 131, so that the water outlets can only be connected to the constant opening 131 through the flow gap 133.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. An installation structure of a water outlet valve, comprising: a body (1) and an installation fixture (3);
the body (1) being disposed with a cavity having an opening at the side facing an installation surface;
the installation fixture (3) being disposed with an insertion portion (31) and an abutting portion (32);
**characterized in that**
the cavity is axially extending through the body (1); and
the installation structure further comprises an installation shaft (2) being disposed in the cavity inside the body (1) and extending along an axial direction of the body (1), an axial direction defined by the installation shaft (2) corresponding to the axial direction of the body (1), wherein the installation shaft (2) defines a through installation cavity along the axial direction thereof;
wherein the through installation cavity of the installation shaft (2) is configured to be entered by the insertion portion (31) of the installation fixture (3) from a side of the through installation cavity away from the installation surface and pass the installation fixture (3) therethrough, such that the abutting portion (32) of the installation fixture (3) remains located in the through installation cavity and abuts an inner wall of the through installation cavity at the side of the through installation cavity near the installation surface, whereas the insertion portion (31) of the installation fixture (3) extends outward from the through installation cavity of the installation shaft (2) through an opening at the side of the through installation cavity near the installation surface; the insertion portion (31) of the installation fixture (3) further extending outward from the opening of the body (1) at the side facing the installation surface to be inserted to the installation surface.

2. The installation structure of a water outlet valve according to claim 1, wherein the installation fixture (3) is a screw.

3. A water outlet valve, comprising the installation structure according to claim 1 or 2, wherein the body (1) further comprises a water inlet (11), at least two water outlets (12) and a waterway switching shaft (13), the waterway switching shaft (13) being movable with respect to the body (1) to make the water inlet (11) connected to different water outlets (12).

4. The water outlet valve according to claim 3, wherein the waterway switching shaft (13) has a constant opening (131) that is connected to the water inlet (11) and a flow port (132) that moves with the waterway switching shaft (13); wherein, when the flow port (132) is connected to one of the water outlets (12), this water outlet (12) is in a water flowing state, and the remaining water outlets (12) are in a water stop state.

5. The water outlet valve according to claim 4, wherein the water inlet (11) and the water outlets (12) are respectively disposed on the side surface of the body (1) and extend in a direction perpendicular to the axial direction of the body (1).

6. The water outlet valve according to claim 5, wherein the waterway switching shaft (13) is disposed in the body (1) along the axial direction of the body (1) and is rotatable around the axial direction of the body (1), the flow port (132) being disposed on the side wall of the waterway switching shaft (13); the installation shaft (2) being disposed in the waterway switching shaft (13), and a flowing gap (133) being disposed between an area of the outer wall of the installation shaft (2) corresponding to the constant opening (131) and the flow port (132) and the inner wall of the waterway switching shaft (13); the outer wall of the installation shaft (2) being provided at both ends of the flowing gap (133) with a sealing member that is sealingly fitted to the inner wall of the waterway switching shaft (13).

7. The water outlet valve according to claim 6, further comprising: a switching member (4) for driving the rotation of the waterway switching shaft (13), the switching member (4) being mounted on an end of the body (1) away from the installation fixture (3) and being linked to the waterway switching shaft (13).

8. The water outlet valve according to claim 7, further comprising an upper sealing seat (14) and a lower sealing seat (15), the upper sealing seat (14) and the lower sealing seat (15) being respectively disposed at two ends of the body (1) along the axial direction and sealing the inner wall of the body (1); the lower sealing seat (14) being disposed with a passage through which the insertion portion (31) passes along the axial direction; wherein an end surface of the waterway switching shaft (13) and an end surface of the lower sealing seat (14) form the constant opening (131).

9. The water outlet valve according to claim 8, wherein the switching member (4) is a rotating handle.

10. The water outlet valve according to claim 9, wherein a seal ring is disposed on the outer circumference of the opening of the water outlet (12) at one side near the waterway switching shaft (13), the seal ring and the side wall of the waterway switching shaft (13) being fitted to seal the water outlets (12) from the constant opening (131).

## Patentansprüche

1. Installationsstruktur eines Wasserauslassventils, umfassend:
einen Körper (1) und eine Installationsvorrichtung (3),
wobei der Körper (1) mit einem Hohlraum angeordnet ist, der eine Öffnung an der Seite aufweist, die einer Installationsfläche zugewandt ist,
wobei die Installationsvorrichtung (3) mit einem Einführungsabschnitt (31) und einem Anschlagabschnitt (32) angeordnet ist,
**dadurch gekennzeichnet, dass**
der Hohlraum sich axial durch den Körper (1) erstreckt und
die Installationsstruktur ferner einen Installationsschaft (2) umfasst, der in dem Hohlraum innerhalb des Körpers (1) angeordnet ist und sich entlang einer axialen Richtung des Körpers (1) erstreckt, wobei eine axiale Richtung, die durch den Installationsschaft (2) definiert ist, der axialen Richtung des Körpers (1) entspricht, wobei der Installationsschaft (2) einen durchgehenden Installationshohlraum entlang seiner axialen Richtung definiert,
wobei der durchgehende Installationshohlraum des Installationsschafts (2) so konfiguriert ist, dass der Einführungsabschnitt (31) der Installationsvorrichtung (3) von einer Seite des durchgehenden Installationshohlraums, der von der Installationsfläche entfernt ist, eintreten kann und die Installationsvorrichtung (3) durch diesen hindurchführt, so dass der Anschlagabschnitt (32) der Installationsvorrichtung (3) in dem durchgehenden Installationshohlraum verbleibt und an einer Innenwand des durchgehenden Installationshohlraums an der Seite des durchgehenden Installationshohlraums nahe der Installationsfläche anschlägt, während der Einführungsabschnitt (31) der Installationsvorrichtung (3) sich aus dem durchgehenden Installationshohlraum des Installationsschafts (2) durch eine Öffnung an der Seite des durchgehenden Installationshohlraums nahe der Installationsfläche nach außen erstreckt, wobei sich der Einführungsabschnitt (31) der Installationsvorrichtung (3) von der Öffnung des Körpers (1) an der der Installationsfläche zugewandten Seite weiter nach außen erstreckt, um in die Installationsfläche eingeführt zu werden.

2. Installationsstruktur eines Wasserauslassventils nach Anspruch 1, bei welcher die Installationsvorrichtung (3) eine Schraube ist.

3. Wasserauslassventil mit der Installationsstruktur nach Anspruch 1 oder 2, bei welchem der Körper (1) ferner einen Wassereinlass (11), mindestens zwei Wasserauslässe (12) und einen Wasserweg - Schaltschaft (13) umfasst, wobei der Wasserweg - Schaltschaft (13) in Bezug auf den Körper (1) beweglich ist, um den Wassereinlass (11) mit verschiedenen Wasserauslässen (12) zu verbinden.

4. Wasserauslassventil nach Anspruch 3, bei welchem der Wasserweg - Schaltschaft (13) eine durchgehende Öffnung (131), die mit dem Wassereinlass (11) verbunden ist, und eine Durchflussöffnung (132) aufweist, die sich mit dem Wasserweg - Schaltschaft (13) bewegt, wobei, wenn die Durchflussöffnung (132) mit einem der Wasserauslässe (12) verbunden ist, dieser Wasserauslass (12) in einem Wasserströmungszustand ist und die übrigen Wasserauslässe (12) in einem Wasserstoppzustand sind.

5. Wasserauslassventil nach Anspruch 4, bei welchem der Wassereinlass (11) und die Wasserauslässe (12) jeweils an der Seitenfläche des Körpers (1) angeordnet sind und sich in einer Richtung senkrecht zur axialen Richtung des Körpers (1) erstrecken.

6. Wasserauslassventil nach Anspruch 5, bei welchem der Wasserweg - Schaltschaft (13) in dem Gehäuse (1) entlang der axialen Richtung des Gehäuses (1) angeordnet ist und um die axiale Richtung des Gehäuses (1) drehbar ist, wobei die Durchflussöffnung (132) an der Seitenwand des Wasserweg - Schaltschafts (13) angeordnet ist, wobei der Installationsschaft (2) in dem Wasserweg - Schaltschaft (13) angeordnet ist und ein Fließspalt (133) zwischen einem Bereich der Außenwand des Installationsschafts (2), der der durchgehenden Öffnung (131) und der Durchflussöffnung (132) entspricht, und der Innenwand des Wasserweg - Schaltschafts (13) angeordnet ist, wobei die Außenwand des Installationsschafts (2) an beiden Enden des Fließspaltes (133) mit einem Dichtungselement versehen ist, das dichtend an der Innenwand des Wasserweg - Schaltschafts (13) angebracht ist.

7. Wasserauslassventil nach Anspruch 6, das ferner umfasst: ein Schaltelement (4) zum Antreiben der Drehung des Wasserweg - Schaltschafts (13), wobei das Schaltelement (4) an einem von der Installationsvorrichtung (3) abgewandten Ende des Körpers (1) angebracht und mit dem Wasserweg - Schaltschaft (13) verbunden ist.

8. Wasserauslassventil nach Anspruch 7, ferner umfassend einen oberen Dichtungssitz (14) und einen unteren Dichtungssitz (15), wobei der obere Dichtungssitz (14) und der untere Dichtungssitz (15) jeweils an zwei Enden des Körpers (1) entlang der axialen Richtung angeordnet sind und die Innenwand des Körpers (1) abdichten, wobei der untere Dichtungssitz (14) mit einem Durchgang angeordnet ist, durch den der Einführungsabschnitt (31) entlang der axialen Richtung verläuft, wobei eine Endfläche des Wasserweg - Schaltschafts (13) und eine Endfläche des unteren Dichtungssitzes (14) die durchgehende Öffnung (131) bilden.

9. Wasserauslassventil nach Anspruch 8, bei welchem das Schaltelement (4) ein Drehgriff ist.

10. Wasserauslassventil nach Anspruch 9, bei welchem am Außenumfang der Öffnung des Wasserauslasses (12) an einer Seite nahe dem Wasserweg - Schaltschaft (13) ein Dichtungsring angeordnet ist, der zusammen mit der Seitenwand des Wasserweg - Schaltschafts (13) die Wasserauslässe (12) gegen die durchgehende Öffnung (131) abdichtet.

## Revendications

1. Structure d'installation d'une vanne de sortie d'eau, comprenant:
un corps (1) et un dispositif d'installation (3);
le corps (1) étant disposé avec une cavité présentant une ouverture au niveau du côté faisant face à une surface d'installation;
le dispositif d'installation (3) étant disposé avec une partie d'insertion (31) et une partie de butée (32);
**caractérisée en ce que**
la cavité s'étend axialement à travers le corps (1); et
la structure d'installation comprend en outre un arbre d'installation (2) disposé dans la cavité à l'intérieur du corps (1) et s'étendant le long d'une direction axiale du corps (1), une direction axiale définie par l'arbre d'installation (2) correspondant à la direction axiale du corps (1), dans laquelle l'arbre d'installation (2) définit une cavité d'installation traversante le long de la direction axiale de celui-ci;
dans laquelle la cavité d'installation traversante de l'arbre d'installation (2) est configurée pour être pénétrée par la partie d'insertion (31) de l'accessoire d'installation (3) à partir d'un côté de la cavité d'installation traversante éloigné de la surface d'installation et faire passer l'accessoire d'installation (3) à travers celle-ci, de telle sorte que la partie de butée (32) de l'accessoire d'installation (3) reste située dans la cavité d'installation traversante et vient en butée contre une paroi interne de la cavité d'installation traversante au niveau du côté de la cavité d'installation traversante à proximité de la surface d'installation, tandis que la partie d'insertion (31) de l'accessoire d'installation (3) s'étend vers l'extérieur à partir de la cavité d'installation traversante de l'arbre d'installation (2) à travers une ouverture au niveau du côté de la cavité d'installation traversante à proximité de la surface d'installation; la partie d'insertion (31) de l'accessoire d'installation (3) s'étendant en outre vers l'extérieur à partir de l'ouverture du corps (1) au niveau du côté faisant face à la surface d'installation pour une insertion à la surface d'installation.

2. Structure d'installation d'une vanne de sortie d'eau selon la revendication 1, dans laquelle le dispositif d'installation (3) est une vis.

3. Vanne de sortie d'eau, comprenant la structure d'installation selon la revendication 1 ou 2, dans laquelle le corps (1) comprend en outre une entrée d'eau (11), au moins deux sorties d'eau (12) et un arbre de commutation de voie à eau (13), l'arbre de commutation de voie à eau (13) étant mobile par rapport au corps (1) pour rendre l'entrée d'eau (11) connectée à différentes sorties d'eau (12).

4. Vanne de sortie d'eau selon la revendication 3, dans laquelle l'arbre de commutation de voie à eau (13) présente une ouverture constante (131) qui est connectée à l'entrée d'eau (11) et un orifice d'écoulement (132) qui se déplace avec l'arbre de commutation de voie à eau (13); dans laquelle, lorsque l'orifice d'écoulement (132) est connecté à l'une des sorties d'eau (12), cette sortie d'eau (12) est dans un état d'écoulement d'eau, et les sorties d'eau restantes (12) sont dans un état d'arrêt d'eau.

5. Vanne de sortie d'eau selon la revendication 4, dans laquelle l'entrée d'eau (11) et les sorties d'eau (12) sont respectivement disposées sur la surface latérale du corps (1) et s'étendent dans une direction perpendiculaire à la direction axiale du corps (1).

6. Vanne de sortie d'eau selon la revendication 5, dans laquelle l'arbre de commutation de voie à eau (13) est disposé dans le corps (1) le long de la direction axiale du corps (1) et peut tourner autour de la direction axiale du corps (1), l'orifice d'écoulement (132) étant disposé sur la paroi latérale de l'arbre de commutation de voie à eau (13); l'arbre d'installation (2) étant disposé dans l'arbre de commutation de voie à eau (13), et un espace d'écoulement (133) étant disposé entre une zone de la paroi externe de l'arbre d'installation (2) correspondant à l'ouverture constante (131) et l'orifice d'écoulement (132) et la paroi interne de l'arbre de commutation de voie à eau (13); la paroi externe de l'arbre d'installation (2) étant pourvue aux deux extrémités de l'espace d'écoulement (133) d'un élément d'étanchéité qui est ajusté de manière étanche à la paroi interne de l'arbre de commutation de voie à eau (13).

7. Vanne de sortie d'eau selon la revendication 6, comprenant en outre: un élément de commutation (4) pour entraîner la rotation de l'arbre de commutation de voie à eau (13), l'élément de commutation (4) étant monté sur une extrémité du corps (1) éloignée du dispositif d'installation (3) et étant relié à l'arbre de commutation de voie à eau (13).

8. Vanne de sortie d'eau selon la revendication 7, comprenant en outre un siège d'étanchéité supérieur (14) et un siège d'étanchéité inférieur (15), le siège d'étanchéité supérieur (14) et le siège d'étanchéité inférieur (15) étant respectivement disposés aux deux extrémités du corps (1) le long de la direction axiale et assurant l'étanchéité de la paroi interne du corps (1); le siège d'étanchéité inférieur (14) étant disposé avec un passage à travers lequel la partie d'insertion (31) passe le long de la direction axiale; dans laquelle une surface d'extrémité de l'arbre de commutation de voie à eau (13) et une surface d'extrémité du siège d'étanchéité inférieur (14) forment l'ouverture constante (131).

9. Vanne de sortie d'eau selon la revendication 8, dans laquelle l'élément de commutation (4) est une poignée rotative.

10. Vanne de sortie d'eau selon la revendication 9, dans laquelle une bague d'étanchéité est disposée sur la circonférence extérieure de l'ouverture de la sortie d'eau (12) sur un côté près de l'arbre de commutation de voie à eau (13), la bague d'étanchéité et la paroi latérale de l'arbre de commutation de voie à eau (13) étant ajustées pour rendre étanches les sorties d'eau (12) par rapport à l'ouverture constante (131).
